(19) Europäisches Patentamt
European Patent Office
Office européen des brevets

(11) **EP 1 290 514 B1**

(12) **EUROPÄISCHE PATENTSCHRIFT**

(45) Veröffentlichungstag und Bekanntmachung des Hinweises auf die Patenterteilung:
**09.03.2005 Patentblatt 2005/10**

(51) Int Cl.⁷: **G05B 19/4061**, G05B 19/4062, E05F 15/16

(21) Anmeldenummer: **01943084.2**

(22) Anmeldetag: **16.05.2001**

(86) Internationale Anmeldenummer:
**PCT/DE2001/001845**

(87) Internationale Veröffentlichungsnummer:
**WO 2001/092975 (06.12.2001 Gazette 2001/49)**

(54) **VERFAHREN ZUR POSITIONIERUNG EINER FREMDKRAFTBETÄTIGTEN SCHLIESSFLÄCHE**

METHOD FOR POSITIONING A CLOSING SURFACE WHICH IS ACTUATED BY AN EXTERNAL FORCE

PROCEDE PERMETTANT DE POSITIONNER UNE SURFACE DE FERMETURE ACTIONNEE PAR FORCE EXTERNE

(84) Benannte Vertragsstaaten:
**DE ES FR GB IT**

(30) Priorität: **31.05.2000 DE 10026991**

(43) Veröffentlichungstag der Anmeldung:
**12.03.2003 Patentblatt 2003/11**

(73) Patentinhaber: **ROBERT BOSCH GMBH**
**70442 Stuttgart (DE)**

(72) Erfinder:
• **KNAB, Norbert**
**77767 Appenweier (DE)**
• **LUNGHARD, Karlheinz**
**76593 Gernsbach (DE)**
• **KAHLES, Patric**
**77815 Bühl (DE)**

(56) Entgegenhaltungen:
EP-A- 0 380 707    EP-A- 0 714 052
WO-A-94/25911    DE-A- 19 527 456
DE-C- 19 632 910    DE-U- 9 217 563
US-A- 4 694 390    US-A- 5 131 506

EP 1 290 514 B1

**Beschreibung**

Technisches Gebiet

Die Erfindung bezieht sich auf ein Verfahren zur Positionierung einer fremdkraftbetätigten Schließfläche. In Kraftfahrzeugen aller Art kommen heute vermehrt elektrisch betätigte Fensterheber und Schiebedächer zum Einsatz. Deren elektrische Antriebe sorgen für ein sicheres Schließen der Dach- oder Fensterflächen durch deren Vorschub in eine mechanische Endposition. Die mechanische Endposition kann durch äußere Einflüsse variieren, so daß sich der Zeitpunkt des Erreichens der Schließposition verschieben kann.

Stand der Technik

Bei fremdkraftbetätigten Verstellsystemen wie Fensterhebersystemen oder Schiebedachantrieben ist ein sicheres Schließen der zu schließenden Fläche unabdingbar, so daß die Fahrgastzelle eines Kraftfahrzeuges beispielsweise gegen Einbruch und Diebstahl zuverlässig geschützt ist. Zu diesem Zweck wird das Schließsystem beim Schließen in seine mechanisch begrenzte Endlage gefahren. Als Abschaltkriterium dienen meist eine Unterdrehzahl-, Momenten- oder eine Stromerkennung. Sobald ein vorgegebener Grenzwert für eine definierte Zeit überschritten wird, wird der elektrische Antrieb der zu schließenden Fläche stillgesetzt. Um ein sicheres Schließen der zu schließenden Fläche zu gewährleisten, müssen die Grenzwerte jedoch entsprechend hoch gewählt werden. Dies hat eine hohe mechanische Belastung der eingesetzten Bauteile wie z.B. Fensterheber, Türen, Motoren etc. zur Folge, deren Dimensionierung und Abnutzung entsprechend hoch zu veranschlagen ist.

Weiterhin wird der obere Anschlag bei Fensterhebersystemen mit Schließkraftbegrenzung als Referenzposition benutzt. Anhand dieser Referenzposition werden wichtige Daten wie z.B. die Schutzbereichsgrenzen wie der 4- mm sowie der 200 mm-Bereich des Schließsystems bestimmt. Durch das wiederholte Anfahren des tatsächlichen oberen Anschlages wird diese Referenzposition ständig innerhalb bestimmter Toleranzen nachgeführt. Eventuell sich einstellende Veränderungen der Systemmechanik werden auf diese Weise erfaßt und nachgeführt.

Bei heutigen Anwendungen von elektrischen Betätigungen für Fensterflächen oder Schiebedächer muß berücksichtigt werden, daß·aus Gewichtsgründen das im Automobilbau verwendete Blech im Tür- bzw. Dachbereich immer dünner wird. Eine mechanische Blockierung durch Einfahren der zu schließenden Fläche an ihren mechanischen Anschlag würde eine Verspannung und eine von außen sichtbare Verwindung der Blechflächen zur Folge haben, was höchst unerwünscht ist.

DE 195 27 456 A1 offenbart ein Verfahren zum Positionieren eines Teiles. Beim erstmaligen Erreichen mindestens einer der Endpositionen wird die Stellung des Antriebes erfaßt und gespeichert. Beim nächsten Annähern des Teiles an die Endposition wird der Antrieb vor Erreichen der Endposition gestoppt oder dessen Antriebsrichtung reversiert.

DE 196 32 910 C1 betrifft ein Verfahren zum berührungslosen Anfahren der unteren Anschlagposition einer Fremdkraft betätigten Fensterscheibe eines Kraftfahrzeuges. Die Bewegung der Fensterscheibe durch den Antrieb läßt sich in zwei Phasen unterteilen; während der zweiten Phase der Stellbewegung wird ein zu erwartender Nachlaufweg auf Basis der Bewegungsgeschwindigkeit der Fensterscheibe und/oder der Betriebsspannung des elektrischen Antriebes berechnet.

Darstellung der Erfindung

Die mit dem erfindungsgemäßen Verfahren erzielbaren Vorteile liegen darin, daß der elektrische Antrieb zur Erreichen des tatsächlichen oberen Anschlages stillgesetzt wird. Trotz vorzeitiger Abschaltung ist die Schließsicherheit der zu schließenden Flächen gewährleistet. Mit den erfindungsgemäß vorgeschlagenen Verfahren wird die Beanspruchung des elektrischen Antriebes sowie der mechanischen Komponenten auf ein unabdingbares Minimum herabgesetzt, da Verspannungszustände durch ungebremst an mechanische Anschläge anstoßende Schließflächen ausgeschaltet sind. Dadurch läßt sich eine erhebliche Erhöhung der Dauerlauffestigkeit eines elektrisch betätigbaren Schließsystems erreichen. Da die mechanischen Beanspruchungen am Schließsystem nunmehr drastisch reduziert sind, ist auch eine leichtere Dimensionierung der die Verschiebebewegung realisierenden Bauteile und Baukomponenten möglich. Eine unerwünschte, die Einsatzfähigkeit des elektrischen Antriebes einschränkende Temperaturerhöhung ist ebenso ausgeschlossen, da die Stillsetzung des Antriebes rechtzeitig vor Erreichen des mechanischen Anschlages erfolgt und der Elektroantrieb rechtzeitig abgeschaltet wird. Der kritische Bereich, d.h. der 4 mm-Bereich kurz vor Erreichen des mechanischen Anschlages wird anhand des aktuellen Systemzustandes und der bereits ermittelten Systemdaten errechnet und gegebenenfalls angepaßt.

Durch die im erfindungsgemäßen Verfahren stets neu erfolgende Berechnung einer neuen Abschaltposition, abgeleitet unter Hinzuziehung der jeweils vorhergehenden Abschaltposition, läßt sich am elektrischen Antrieb der zu schließenden Fläche stets eine Stillsetzung zur rechten Zeit vor vollständigem Eintauchen in die eine Schließfläche gegebenenfalls umfangende Dichtung realisieren.

Zeichnung

Anhand der Zeichnung wird die Erfindung nachstehend näher erläutert.

Es zeigt:

Fig. 1 ein bis in den tatsächlichen, aktuellen Nullpunkt in eine Dichtung eingefahrene Fensterscheibe,

Fig. 2 eine Einfahrsituation einer Fensterscheibe, mit sich erhöhender Eintauchtiefe in eine die Fensterscheibe umfangende Dichtung,

Fig. 3 eine Einfahrsituation einer Fensterscheibe mit sich verringernder Eintauchtiefe und

Fig. 4 eine in der Steuereinheit ablaufende Berechnungsroutine für das Ermitteln einer neuen Abschaltposition für den elektrischen Antrieb der zu schließenden Fläche.

Ausführungsvarianten

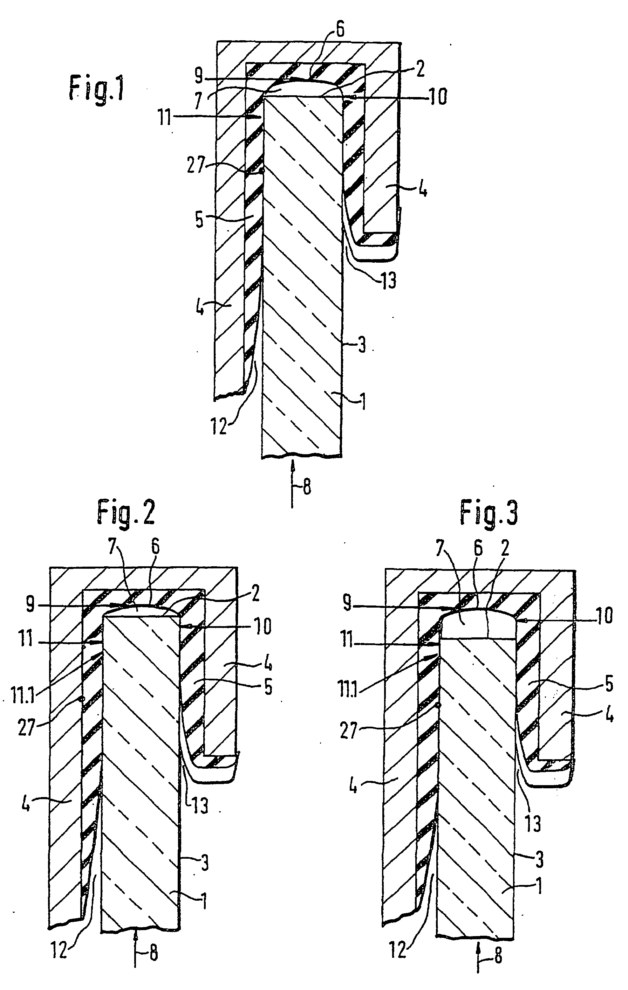

Fig. 1 zeigt die Darstellung einer bis an den tatsächlichen, aktuellen Nullpunkt in eine Dichtung eingefahrenen Fensterscheibe.

Die Oberkante 2 einer zu schließenden, mittels eines elektrischen Antriebes verfahrbaren Schließfläche 1, beispielsweise einer Fensterscheibe, läuft in eine Dichtung 5 ein, die in einen Türrahmen 4 einer Kraftfahrzeugtüre eingelassen sein kann. Die Oberkante 2 der Fensterscheibe 1 befindet sich im tatsächlichen aktuellen Nullpunkt $p_2$. Der physikalische - jedoch nur unter erheblicher Deformation der Türdichtung 5 - erreichbare Nullpunkt $p_1$, ist mit Bezugszeichen 9 bezeichnet.

Der elektrische Antrieb bewegt die Fensterscheibe 1 in Richtung des eingezeichneten Pfeiles 8 in die Einlaufschrägen 12, 13, die beidseits der Außenflächen 3 der Fensterscheibe 1 vorgesehen sind. Mit Bezugszeichen 11 ist die Abschaltposition $p_a$ bezeichnet, in der der elektrische Antrieb der Fensterscheibe 1 stillgesetzt wird, so rechtzeitig, daß die Oberkante 2 der Fensterscheibe 1 zuverlässig schließend in die Dichtung 5 des Türrahmens 4 einläuft.

Die Ermittlung einer sicheren Abschaltposition 11, $p_a$, in der ein sicheres Schließen der Schließfläche 1 gewährleistet ist, wird empirisch ermittelt. Es erfolgt die Ermittlung einer Eindringtiefe, in die die Schließfläche 1 umgebende Dichtung 5 abhängig von den Schließsystemparametern wie beispielsweise Motormoment des elektrischen Antriebes, Temperatur, Dichtungsgeometrie, Motorspannung, Scheibenoberfläche, Dichtungsreibung, kinetische Systemenergie sowie der Türgeometrie. Aus diesen Parametern läßt sich die Eintauchtiefe der Fensterscheibe 1 mittels einer Meßreihe empirisch ermitteln. Dieser Zusammenhang wird nach Ermittlung als Parameterfeld $p_a$ (x, y, z........) in einem Rechner abgespeichert und kann später für vorzunehmende Berechnungen jederzeit als Referenz herangezogen werden.

Je nachdem, welche Sensorik 27 am Steuergerät 26 vorgesehen ist, können Schließsystemparameter S des Schließsystemes erfaßt und ebenfalls gespeichert werden. Solche zu ermittelnden Parameter können die Spannung, die Motordrehzahl, die Pulsweitenmessung oder die Temperaturerfassung an der Schließfläche 1 sein. Aufgrund der auf empirischen Wege erfaßten Daten zur Eintauchtiefe der Schließfläche 1 und dem mittels der Sensorik 27 erfaßten Systemzustand kann mittels der gespeicherten Systemparameter die reale Eintauchtiefe

$$E_x = f(p_a(S))$$

ermittelt werden.

Abhängig vom ermittelten Wert für die reale Eintauchtiefe $E_x$ wird eine Abschaltposition

$$P_{x,0} = f(E_x)$$

ermittelt. Diese Position wird so gewählt, daß ein sicheres Schließen der Schließfläche 1 gewährleistet wird, der elektrische Antrieb aber so frühzeitig stillgesetzt wird, daß die zu schließende Schließfläche 1 kurz vor Erreichen des realen mechanischen Anschlages 9 zum Stillstand kommt. Dadurch läßt sich eine zu starke mechanische Beanspruchung der Antriebskomponenten des Schließsystemes vermeiden.

Bei einer Systemverstellung in Bezug auf den oberen mechanischen Anschlag 9, bestehend aus in ein Blechprofil 4 eingelassene Türdichtung 5, wird der elektrische Antrieb der Schließfläche 1 bei Erreichen der Abschaltposition gestoppt, solange die Abweichung der ermittelten Abschaltposition $p_{x,0}$ mit der zu erwartenden neuen Abschaltposition $p_{x,1}$ innerhalb eines vorgebbaren Toleranzbereiches liegt.

Die Abschätzung der neuen Eintauchtiefe erfolgt über eine Abschätzung der zu erwartenden Eintauchtiefe mittels der aktuell bemessenen Systemparameter, $S_{akt}$ und der zuletzt gespeicherten Systemwerte $S_{Speicher}$.

$$dp_x = p_a (S_{akt}) - p_a (S_{speicher}).$$

Fig. 2 zeigt eine Einfahrsituation einer Schließfläche mit sich erhöhender Eintauchtiefe in die Dichtung.

Ergibt sich aus der oben genannten Beziehung für $dp_x$ eine erhöhte Eintauchtiefe, so ist $dp_x > K_2$. In diesem Falle wird dem sicheren Schließen der Vorzug vor der mechanischen Entlastung der Baukomponenten des Schließsystems gegeben. Zur Erhöhung der Schließsicherheit wird die Abschaltposition $p_{x,0}$ neu berechnet, der elektrische Antrieb beim Erreichen von $p_{x,0}$ stillgesetzt. Liegt die Eintauchtiefe oberhalb der bekannten Nullposition 10, wie in Fig. 2 dargestellt, so wird der elektrische Antrieb der zu schließenden Fläche bis zur Blockierung angesteuert. Die Systemparameter S werden gespeichert und daraus die neue Stillstandsposition für den folgenden Verstellzyklus berechnet. In der Darstellung gemäß Fig. 2 ist erkennbar, daß die Oberkante 2 der angetriebenen Schließfläche 1 über die Nullposition 10 hinaus in die Dichtung 5 eingefahren ist. Im Vergleich zum in Fig. 1 dargestellten Zustand, ist die Oberkante 2 der Schließfläche 1 lediglich weiter in die Türdichtung 5 eingefahren; der sich zwischen Oberkante 2 der Schließfläche 1 und der Rundung 6 der Türdichtung 5 einstellende Hohlraum 7 ist wesentlich kleiner bemessen.

Fig. 3 zeigt eine Einfahrsituation einer Schließfläche mit sich verringernder Eintauchtiefe in die Türdichtung im Türrahmen.

Je nach Systemkonfiguration kann dem sicheren Schließen vor der mechanischen Entlastung der Bauteilkomponenten der Vorzug gegeben werden oder das Schließsystem auf eine Schonung der mechanischen Komponenten hin optimiert werden. Innerhalb eines sicheren Toleranzbandes - sicher insofern als innerhalb des Toleranzbandes ein sicheres Erreichen der Schließposition durch das Eintauchen der Oberkante 2 der Schließfläche 1 in die Türdichtung sichergestellt ist - wird die in vorhergehenden Verstellzyklus jeweils berechnete Stillstandsposition $p_{x,0}$ überfahren, die Systemparameter S werden gespeichert und das System in die mechanische Endlage gefahren.

In dieser Konfiguration liegt die Oberkante 2 der Schließfläche 1 nicht in Höhe der Nullposition 10, sondern fast etwa parallel zur Abschaltposition 11, $p_{x,0}$; die neue Abschaltposition $p_{x,1}$ ist mit Bezugszeichen 11.1 bezeichnet und markiert. Da die Oberkante 2 der Schließfläche 1 nicht vollständig in die Türdichtung 5 eingefahren ist, ist der sich zwischen der Rundung 6 der Türdichtung 5 und der Oberkante 2 der Schließfläche 1 einstellende Hohlraum 7 größer bemessen verglichen mit der Größe des Hohlraumes in Fig. 2.

Durch gezielte Auswahl und Vorgabe der Parameterwerte für K, $K_1$ und $K_2$ läßt sich das Systemverhalten des Schließsystems gezielt beeinflussen. Die Parameter K, $K_1$ und $K_2$ können variiert werden. Wird das Fahrzeug von außen durch Betätigung der Zentralverriegelung verschlossen, werden die Parameter so eingestellt, daß ein sicheres Schließen aller Flächen gewährleistet ist. Erfolgt ein Schließen der Fenster vom Fahrzeuginneren aus, so kann durch die Wahl der Werte für K, $K_1$ und $K_2$ der mechanischen Entlastung der Bauteilkomponenten vor dem sicheren Schließen der Vorzug gegeben werden.

Während der Lebensdauer eines Schließsystems können sich einstellende mechanische Änderungen, z.B. sich einstellendes Spiel an den Bauteilen die Fensterheber oder dergleichen oder an diesen zugeordneten Übertragungselementen, das Systemverhalten beeinflussen. Daher werden die mechanischen Anschläge in definierten Zeitintervallen angefahren, die Abschaltung des jeweiligen elektrischen Antriebes zum Abbremsen des Vorschubes der Schließfläche 1 in Richtung 8 an der berechneten Abschaltposition $p_{x,0}$ wird unterdrückt; die Ermittlung dieser Anfahrintervalle kann empirisch erfolgen, die Nachführung der Systemänderung kann anhand der Summe der zurückgelegten Verstellwege der Schließfläche 1 ermittelt werden. Neben dem Heranziehen des insgesamt zurückgelegten Verstellweges, kann auch die Anzahl der bislang getätigten Soft-Stopps also der gezielten, rechzeitigen Abschaltung des elektrischen Antriebes zur Ermittlung herangezogen werden.

So kann ein Schließsystem anfangs öfter in seine jeweiligen mechanischen Endlagen 9 gefahren werden, mit Erhöhung der Anzahl der Verstellzyklen erfolgt ein solches Anfahren weniger häufig. Umgekehrt kann auch mit steigender Lebensdauer des Schließsystems ein öfteres Anfahren der mechanischen Endlage 9 erfolgen, um sich einstellendes Spiel in den Bauteilkomponenten des Schließsystemes zu eliminieren oder bei den Berechnungen der jeweiligen Anschlags- bzw. Abschaltpositionen zu berücksichtigen.

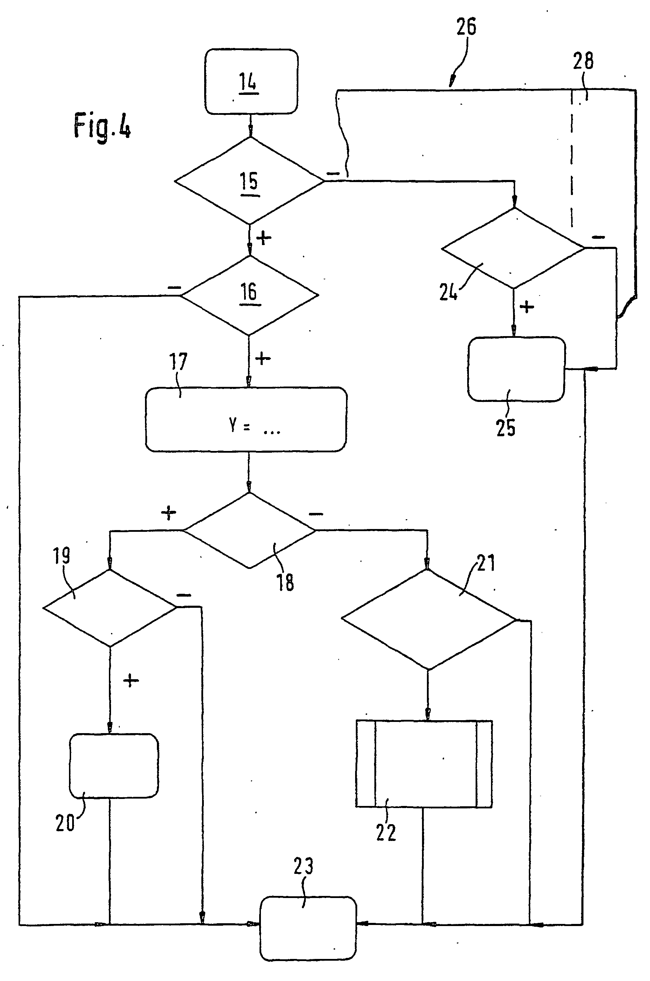

Fig. 4 zeigt beispielhaft die in einer mindestens einen Speicher enthaltenen Steuereinheit ablaufenden Abfrage und Berechnungsroutinen hier dargestellt für einen unteren Anschlag einer Schließfläche 1.

Nach Start der Berechnungsroutine für die Ermittlung eines adaptiven Soft-Stopps für einen unteren Anschlag nach dem Startpunkt 14 erfolgt zunächst die Abfrage 15 auf eine untere Anschlagposition. Die untere Anschlagposition kann bekannt sein oder ist mittels eines Referenzlaufes ermittelbar. Ist diese nicht bekannt, wird zu einer Abfrage 24 verzweigt, ob der untere Anschlag erreicht ist. Falls dem nicht so ist, wird in der Parametervorgabe 25 die untere Anschlagposition als aktuelle Position gesetzt, der Vorhaltewert auf X gesetzt. Ist der untere Anschlag hingegen nicht erreicht, erfolgt eine Verzweigung der Berechnungsroutine an den Endpunkt 23.

Ausgehend von der Abfrage 15 wird in die Abfrage 16 verzweigt, ob eine aktuelle Absenkung vorliegt oder nicht. Falls dies verneint wird, erfolgt eine Verzweigung an die Endposition 23 bis zum nächsten zyklischen, Aufruf der Berechnungsroutine bei Position 14.

Liegt eine Absenkbewegung der Schließfläche 1 vor, so wird die Differenz y ermittelt, die sich aus der Differenz der gespeicherten Anschlagsposition und der aktuellen Stillstandsposition ergibt Ist der elektrische Antrieb eingeschaltet, was sich aus einer Abfrage 18 ergibt, erfolgt ein Vergleich der Differenz y mit dem aktuellen Vorhaltewert. Ist die Differenz y kleiner als der Vorhaltewert, wird der elektrische Antrieb stillgesetzt, falls nicht, erfolgt eine Verzweigung vom Vorhaltewertvergleich 19 zum Ende 23 der Berechnungsroutine.

Ergibt sich aus der Abfrage 18 des Status' des elektrischen Antriebes, daß diese ausgeschaltet ist, wird die Korrektur 21, 22 des Vorhaltewertes eingeleitet, was in einem Rechenbaustein 22 geschieht. Bei der nächsten Absenkbewegung wird ein neuer Vorhaltewert der Berechnung der Abschalteposition zugrundegelegt. Die Abschaltposition läßt sich durch zyklisches oder azyklisches Anfahren und/oder Überfahren der Anschläge korrigieren. Dadurch lassen sich auch systembedingte Veränderungen, z.B. Ausdehnungsänderung von mechanischen Bauteilen oder Änderungen des Verstellweges ermitteln, wie im Zusammenhang mit Figuren 1, 2 und 3 bereits erörtert.

Bezugszeichenliste

| | |
|---|---|
| 1 | Fensterscheibe |
| 2 | Oberkante |
| 3 | Außenfläche |
| 4 | Türrahmen |
| 5 | Dichtung |
| 6 | Rundung |
| 7 | Hohlraum |
| 8 | Antriebsrichtung |
| 9 | physikalischer Nullpunkt $p_1$ |
| 10 | tatsächlicher aktueller Nullpunkt $p_2$ |
| 11 | Abschaltposition $p_{x,0}$ |
| 11. | neue Abschaltposition $p_{x,1}$ |
| 12 | Einlaufschräge |
| 13 | Startposition |
| 14 | Abfrage untere Anschlagsposition |
| 15 | Abfrage Absenkung |
| 16 | y Differenz Anschlagsposition - aktuelle Position |
| 17 | Abfrage Antrieb |
| 18 | Abfrage Differenz y |
| 19 | Antriebsansteuerung |
| 20 | Abfrage Systemzustand |
| 21 | Berechnungsroutine Vorhaltewert |
| 22 | Endpunkt Routine |
| 23 | Abfrage Erreichung unterer Anschlag |
| 24 | Parametervorgabe Anschlagposition, Vorhaltewert |
| 25 | Steuereinheit |
| 26 | Sensorik |
| 27 | Speicher |
| A | Anschlagposition |
| $p_a$ | Abschalteposition |
| S | Systemparameter |

**Patentansprüche**

**1.** Verfahren zum berührungslosen Anfahren einer mit einer Dichtung (5) versehen, festen oberen Anschlagposition A einer fremdkraftbetätigten Fensterscheibe (1) eines Kraftfahrzeuges, wobei beim Anfahren einer oberen Scheibenkante (2) an die Anschlagsposition (A) ein Steuersignal von einer Steuereinheit (26) generiert wird, wodurch der Antrieb in eine Abschaltposition $p_a$ ausgeschaltet und/oder dessen Antriebsrichtung geändert wird, so daß die oberen Scheibenkante (2) in einer Position $p_0$ zum Stillstand gelangt, **dadurch gekennzeichnet, daß**

beim Annähern der Scheibe an die Anschlagsposition A. Systemparameter $(S_1....S_n)$ durch Sensoren (27) erfaßt und in einem Speicher (28) gespeichert werden,

das ein von den Systemparametern des $(S_1.....S_n)$ abhängiger Systemzustand $S_z$ $(S_j - S_n)$ mit der Abschalteposition $p_a$ aus einem Kennfeld ausgelesen wird,

das ein Vergleich zwischen dem jeweils aktuellen System 24 stand $SZ_{akt}$ $(S_1 - S_n)$ und einem im Speicher 28 hinterlegten Vergleichssystemzustand $SZ_{ver}$ $(S_1 - S_n)$ durchgeführt wird, insbesondere eine Differenz gebildet wird und eine Abweichung $\Delta SZ$ ermittelt wird und

das in Abhängigkeit von der ermittelten Abweichung $\Delta SZ$ eine neue Abschaltposition $p_{aneu}$ berechnet wird.

**2.** Verfahren nach Anspruch 1, **dadurch gekennzeichnet, daß** von den Sensoren (27) variable Systemparameter $(S_1 - S_v)$ insbesondere Motordrehmoment, Temperatur der Fenster oder Dichungsumgebung, Motorspannung, Dichtungsreibung, kinetische Systemenergie erfaßt werden.

**3.** Verfahren nach Anspruch 1 oder 2, **dadurch gekennzeichnet, daß** fixe Systemparameter $(S_1 - S_f)$, insbesondere die Dichtungsgeometrie, die Scheibenoberfläche, die Türgeometrie oder dergleichen betreffend vorgegeben werden bzw. vorgebbar sind.

**4.** Verfahren nach einem der Ansprüche 1 bis 3, **dadurch gekennzeichnet, daß** die Eintauchtiefe der Scheibenoberkante (2) in die Dichtung (5) als Systemzustand aus dem Parameterfeld ausgewiesen wird.

**5.** Verfahren nach Anspruch 1, . **dadurch gekennzeichnet, daß** der Zusammenhang der durch die Fensterscheibe (1) angefahrenen Nullposition (10) $p_0$ und den Systemzuständen $(S_1 - S_n)$ im Vorfeld empirisch ermittelt und das Kennfeld $P_a$ $(S_1 - S_n)$ im Speicher (28) hinterlegt werden.

**6.** Verfahren nach Anspruch 1, **dadurch gekennzeichnet, daß** als Sensoren (27) Spannungsmesser, Drehzahlmesser, Pulsweitenmesser, Temperaturdetektoren oder dergleichen eingesetzt werden.

**7.** Verfahren nach Anspruch 1', **dadurch gekennzeichnet, daß** die Nullposition (10) $P_0$, $P_0$, durch die Steuereinheit (26) anhand der aktuellen Systempa-

rameter $S_1$ - $S_n$ und des im Speicher abgelegten Kennfeldes $P_a$ $(S_1 - S_n)$ berechnet wird.

8. Verfahren nach Anspruch 1, **dadurch gekennzeichnet, daß** bei einer Abweichung dpa die neue Abschalteposition (11.1) $p_{a'}$ gleich der vorhergehenden Abschaltposition (11) $p_a$ ist.

9. Verfahren nach Anspruch 1, **dadurch gekennzeichnet, daß** bei einem Betrag der Abweichung dpa größer Null und kleiner einer Toleranzgrenze T die neue Abschalteposition (11.1) $P_{a'}$ gleich der vorhergehenden Abschaltposition (11) $P_a$ ist.

10. Verfahren nach Anspruch 7, **dadurch gekennzeichnet, daß** die Toleranzgröße T 0,5 -1 Ankerumdrehung entspricht.

11. Verfahren nach Anspruch 1, **dadurch gekennzeichnet, daß** bei einem durch die Steuereinheit (26) ermittelten Überfahren der Nullposition (10) $p_0$ durch die Scheibenkante (2) die Abweichung dpa gleicher als 0 wird:

12. Verfahren gemäß Anspruch 9, **dadurch gekennzeichnet, daß** bei einer Abweichung dpa kleiner als eine Toleranzgrenze T und größer als eine Referenzgrenze $K_2$ die Scheibenkante (2) gegen die feste Anschlagposition (9) (A) in eine Blockierung gefahren und die Nullposition $P_2$. in Abhängigkeit der Anschlagsposition (9), (A) neu festgelegt wird.

13. Verfahren nach Anspruch 9, **dadurch gekennzeichnet, daß** bei einer Abweichung dpa kleiner als eine Toleranzgrenze T und größer als ein Referenzwert R die Abschalteposition (11) $p_a$ derart korrigiert wird, daß die neue Abschaltposition (11.1) $p_{a'}$ näher zu der festen Anschlagsposition (9) (A) liegt.

14. Verfahren nach Anspruch 1, **dadurch gekennzeichnet, daß** bei einem durch die Steuereinheit (26) ermittelten Nichterreichen der Nullposition (10) $p_0$ durch die Scheibenkante (2) die Abweichung dpa größer als 0 wird.

15. Verfahren nach Anspruch 12, **dadurch gekennzeichnet, daß** bei einer Abweichung dpa größer einer Toleranzgrenze T und kleiner als ein erster Referenzwert R die Abschalteposition (11) $p_a$ derart korrigiert wird, daß die neue Abschaltposition (11.1) $p_{a'}$ entfernter zu der festen Anschlagsposition (9) (A) liegt.

16. Verfahren nach Anspruch 12, **dadurch gekennzeichnet, daß** bei einer Abweichung dpa größer als ein erster Referenzwert $R_1$ und kleiner als ein zweiter Referenzwert $R_2$ die Abschalteposition (11) $p_a$ nicht korrigiert wird und die Scheibe (1) in eine Blok-

kierung durch die Dichtung (5) fährt.

**Claims**

1. Method for the contactless positioning of a windowpane (1) of a motor vehicle, which is provided with a seal (5) and actuated by an external force, in a fixed upper stop position A, wherein, when an upper pane edge (2) is made to approach the stop position (A), a control signal is generated by a control unit (26), as a result of which the drive is switched off in a switch-off position $p_a$ and/or its drive direction is changed with the result that the upper pane edge (2) comes to a standstill in a position $p_0$, **characterized in that**

   when the pane approaches the stop position A, system parameters $(S_1...S_n)$ are sensed by sensors (27) and stored in a memory (28),

   **in that** a system state $S_z(S_1 - S_n)$ which is dependent on the system parameters of the $(S_1.....S_n)$ with the switch-off position $p_a$ is read out of a characteristic diagram,

   **in that** a comparison is carried out between the respective current system state $SZ_{akt}(S_1 - S_n)$ and a comparison system state $SZ_{ver}(S_1 - S_n)$ which is stored in the memory (28), in particular a difference is formed and a deviation $\Delta SZ$ is determined, and

   **in that** a new switch-off position $p_{aneu}$ is calculated as a function of the deviation $\Delta SZ$ which is determined.

2. Method according to Claim 1, **characterized in that** variable system parameters $(S_1 - S_v)$, in particular engine torque, temperature of the windows or surroundings of the seal, motor voltage, seal friction, kinetic system energy are sensed by the sensors (27).

3. Method according to Claim 1 or 2, **characterized in that** fixed system parameters $(S_1 - S_f)$, in particular relating to the seal geometry, the pane surface, the door geometry or the like are predefined or can be predefined.

4. Method according to one of Claims 1 to 3, **characterized in that** the immersion depth of the pane upper edge (2) into the seal (5) is obtained as a system state from the parameter field.

5. Method according to Claim 1, **characterized in that** the relationship between the zero position (10) $p_0$ in which the windowpane (1) is positioned and the system states $(S_1 - S_n)$ is determined empirically beforehand, and the characteristic diagram $P_a$ $(S_1 - S_n)$ is stored in the memory (28).

**6.** Method according to Claim 1, **characterized in that** volt meters, rotational speed meters, pulse width meters, temperature detectors or the like are used as sensors (27).

**7.** Method according to Claim 1, **characterized in that** the zero position (10) $P_0$, $P_{0'}$ is calculated by the control unit (26) with reference to the current system parameters $S_1$ - $S_n$ and the characteristic diagram $P_a$ ($S_1$ - $S_n$) stored in the memory.

**8.** Method according to Claim 1, **characterized in that**, when there is a deviation dpa, the new switch-off position (11.1) $p_{a'}$ is equal to the preceding switch-off position (11) $p_a$.

**9.** Method according to Claim 1, **characterized in that**, when there is an absolute value of the deviation dpa greater than zero and less than a tolerance limit T, the new switch-off position (11.1) $P_{a'}$ is equal to the preceding switch-off position (11) $P_a$.

**10.** Method according to Claim 7, **characterized in that** the tolerance variable T corresponds to 0.5-1 revolutions of an armature.

**11.** Method according to Claim 1, **characterized in that**, when the control unit (26) determines that the pane edge (2) travels beyond the zero position (10) $P_0$ the deviation dpa becomes greater than 0.

**12.** Method according to Claim 9, **characterized in that**, when there is a deviation dpa which is less than a tolerance limit T and greater than a reference limit $K_2$, the pane edge (2) is moved against the fixed stop position (9) (A) into a blocked position, and the zero position $P_2$, is newly determined as a function of the stop position (9),(A).

**13.** Method according to Claim 9, **characterized in that**, when there is a deviation dpa less than a tolerance limit T and greater than a reference value R, the switch-off position (11) $p_a$ is corrected in such a way that the new switch-off position (11.1) $p_{a'}$ is closer to the fixed stop position (9)(A).

**14.** Method according to Claim 1, **characterized in that**, when the control unit (26) determines that the pane edge (2) does not reach the zero position (10) $P_0$, the deviation dpa becomes greater than 0.

**15.** Method according to Claim 12, **characterized in that**, when there is a deviation dpa greater than a tolerance limit T and less than a first reference value R, the switch-off position (11) $p_a$ is corrected in such a way that the new switch-off position (11.1) $p_{a'}$ is further away from the fixed stop position (9)(A).

**16.** Method according to Claim 12, **characterized in that**, when there is a deviation dpa greater than a first reference value $R_1$ and less than a second reference value $R_2$, the switch-off position (11) $p_a$ is not corrected and the pane (1) moves into a position in which it is blocked by the seal (5).

**Revendications**

**1.** Procédé pour atteindre sans contact une position de butée supérieure fixe (A), pourvue d'un joint d'étanchéité (5), d'une vitre de fenêtre (1) d'un véhicule automobile actionnée par une force extérieure, selon lequel, lors de l'arrivée d'une arête supérieure (2) de la vitre à la position de butée (A), une unité de commande (26) produit un signal de commande par lequel l'entraînement est commuté dans une position de coupure $p_a$ et/ou son sens d'entraînement est changé, de sorte que l'arête supérieure (2) de la vitre s'arrête dans une position $p_0$, **caractérisé en ce que** lorsque la vitre s'approche de la position de butée (A), on détecte des paramètres du système ($S_1$ ... $S_n$) au moyen de capteurs (27) et on les stocke dans une mémoire (28), on lit dans un diagramme caractéristique un état du système $S_z$ ($S_1$ - $S_n$) dépendant des paramètres du système ($S_1$ ... $S_n$) avec la position de coupure $p_a$, on effectue une comparaison entre chaque état actuel du système $SZ_{act}$ ($S_1$ ... $S_n$) et un état comparatif du système $SZ_{comp}$ ($S_1$ ... $S_n$) stocké dans la mémoire (28), en particulier en formant une différence et on détermine un écart $\Delta SZ$, et on calcule une nouvelle position de coupure $p_{anouv}$ en fonction de l'écart déterminé $\Delta SZ$.

**2.** Procédé selon la revendication 1, **caractérisé en ce que** les capteurs (27) saisissent des paramètres variables du système ($S_1$ - $S_v$), en particulier le couple moteur, la température de la vitre ou de l'environnement du joint d'étanchéité, la tension du moteur, le frottement du joint d'étanchéité, l'énergie cinétique du système.

**3.** Procédé selon la revendication 1 ou 2, **caractérisé en ce que** des paramètres fixes du système ($S_1$ - $S_f$), en particulier la géométrie du joint d'étanchéité, la surface de la vitre, la géométrie de la porte ou similaires sont prédéterminés ou peuvent être prédéterminés de manière correspondante.

**4.** Procédé selon l'une quelconque des revendications 1 à 3, **caractérisé en ce que** comme état du système on identifie à partir du champ paramétrique la profondeur de pénétration de l'arête supérieure (2) de la vitre dans le joint d'étanchéité (5).

5. Procédé selon la revendication 1,
**caractérisé en ce qu'**
on détermine empiriquement la relation entre la position nulle $p_0$ (10) atteinte par la vitre de fenêtre (1) et les états du système ($S_1 ... S_n$) dans un diagramme préliminaire et on enregistre le diagramme caractéristique $P_a$ ($S_1 - S_n$) dans la mémoire (28).

6. Procédé selon la revendication 1,
**caractérisé en ce que**
comme capteurs (27) on utilise des voltmètres, des tachymètres, des appareils de mesure de largeur d'impulsion, des détecteurs de température ou similaires.

7. Procédé selon la revendication 1, c
**caractérisé en ce qu'**
on calcule la position nulle $p_0$, $p_{0'}$ (10) au moyen de l'unité de commande (26) à partir des paramètres actuels du système ($S_1 - S_n$) et du diagramme caractéristique $P_a$ ($S_1 - S_n$) enregistré dans la mémoire.

8. Procédé selon la revendication 1,
**caractérisé en ce que**
pour un écart $dp_a$, la nouvelle position de coupure $p_{a'}$ (11.1) est identique à la position de coupure précédente $p_a$ (11).

9. Procédé selon la revendication 1,
**caractérisé en ce que**
pour une valeur de l'écart $dp_a$ plus grande que zéro et plus petite qu'une limite de tolérance T, la nouvelle position de coupure $p_{a'}$ (11.1) est identique à la position de coupure précédente $p_a$ (11).

10. Procédé selon la revendication 7,
**caractérisé en ce que**
la limite de tolérance T correspond à 0,5- 1 révolution de l'induit.

11. Procédé selon la revendication 1,
**caractérisé en ce que**
pour un franchissement de la position nulle po (10) par l'arête (2) de la vitre, déterminé par l'unité de commande (26), l'écart $dp_a$ est égal à zéro.

12. Procédé selon la revendication 9,
**caractérisé en ce que**
pour un écart $dp_a$ plus petit qu'une limite de tolérance T et plus grand qu'une limite de référence $K_2$, l'arête (2) de la vitre est amenée en position de blocage contre la position (A) de butée fixe (9) et la position nulle $p_2$ est fixée à nouveau en fonction de la position (A) de butée fixe (9).

13. Procédé selon la revendication 9,
**caractérisé en ce que**
pour un écart $dp_a$ plus petit qu'une limite de tolérance T et plus grand qu'une valeur de référence R, la position de coupure $p_a$ (11) est corrigée de sorte que la nouvelle position de coupure $p_{a'}$ (11.1) soit plus proche de la position (A) de butée fixe (9).

14. Procédé selon la revendication 1,
**caractérisé en ce que**
lorsque l'unité de commande (26) détecte que l'arête (2) de la vitre n'atteint pas la position nulle $p_0$ (10), l'écart $dp_a$ est plus grand que zéro.

15. Procédé selon la revendication 12,
**caractérisé en ce que**
pour un écart $dp_a$ plus grand qu'une limite de tolérance T et plus petit qu'une première valeur de référence R, la position de coupure $p_a$ (11) est corrigée de sorte que la nouvelle position de coupure $p_a$ (11.1) soit plus éloignée de la position (A) de butée fixe (9).

16. Procédé selon la revendication 12,
**caractérisé en ce que**
pour un écart $dp_a$ plus grand qu'une première valeur de référence $R_1$ et plus petit qu'une deuxième valeur de référence $R_2$, la position de coupure $p_a$ (11) n'est pas corrigée et la vitre (1) et est amenée en position de blocage par le joint d'étanchéité (5).

Fig.1

Fig.2

Fig.3

Fig.4